# EUROPEAN PATENT APPLICATION

(11) **EP 2 146 082 A1**
(43) Date of publication of application: **20.01.2010**
(21) Application number: 09163638.1
(22) Date of filing: 24.06.2009
(51) Int. Cl.: F02M 25/07, F16K 11/052

(54) **Flow passage switching valve**

(30) Priority: 16.07.2008 JP 2008184549
(71) Applicant: Aisan Kogyo Kabushiki Kaisha, Obu-shi, Aichi 474-8588 (JP)
(72) Inventor: Hatano, Makoto, Obu-shi Aichi 474-8588 (JP); Tsuzuki, Yasuhiro, Obu-shi Aichi 474-8588 (JP)
(74) Representative: Prüfer & Partner GbR European Patent Attorneys

(57) **Abstract**

A bypass valve (1) comprises a housing (4) formed with diverged passages (2, 3) through which EGR gas can flow. The housing (4) is provided with a valve element (5) for selectively opening and closing the diverged passages (2, 3) to switch a flow passage of the EGR gas, a valve shaft (6) integral with the valve element (5), and a bearing (7, 8) for rotatably supporting the valve shaft (6). Part of the outer periphery of the bearing (7, 8) is placed in one (2) of the passages. The housing (4) is formed with the diverged passages (2, 3) next to the bearing (7, 8) and a partition wall (17) having a valve seat (16). Near the bearing (7, 8), a cooling-water passage (18) is formed by the partition wall (17).

## Description

### Technical Field

The present invention relates to a flow passage switching valve to be utilized as for example an EGR cooler bypass valve and used for switching a flow passage of exhaust gas.

### Background Art

Heretofore, as this type of a flow passage switching valve, for example, there is known an EGR cooler bypass valve provided in an EGR cooler disclosed in e.g. a Patent Literature listed below. This bypass valve is placed in the EGR passage through which high-temperature EGR gas passes and used to switch a flow passage of EGR gas between a passage passing through the EGR cooler and a passage not passing through the EGR cooler. Specifically, as an EGR device (an exhaust gas recirculation device) to be mounted in an engine, there is a device including, in part of the EGR passage, an EGR cooler for cooling EGR gas by heat exchange with cooling water. In this EGR device including the EGR cooler, if EGR gas passes through the EGR cooler while the temperature of the cooling water is low at the time of engine start or cold temperature, the EGR gas would be excessively cooled, resulting in a deterioration in combustion efficiency or other defects. To avoid such defects, the EGR cooler bypass valve is provided. At the time of engine start or cold temperature, this bypass valve is operated to switch the flow passage of EGR gas to the bypass passage not passing through the EGR cooler.

The aforementioned bypass valve comprises a metallic housing formed with an inlet and an outlet for EGR gas and a passage for communicating the inlet and the outlet, a swing-arm-shaped valve element for switching the flow passage of EGR gas by allowing or interrupting communication between the inlet and the outlet, a valve shaft integral with the valve element, and a pair of bearings for rotatably supporting both ends of the valve shaft.
Citation List
Patent Literature

Patent Literature: JP2007-100566A

### Summary of Invention

### Technical Problem

In the bypass valve disclosed in the above Patent Literature, however, part of the outer periphery of the bearing(s?) is located in the EGR gas passage of the housing. Thus, the bearing would be exposed directly to the heat of the high-temperature EGR gas. In some cases, therefore, the bearing may be thermally deformed, resulting in impaired bearing function. In the configuration that a seal member is provided between the bearing and the valve shaft, this seal member needs any measures against the heat.

The present invention has been made in view of the circumstances and has a purpose to provide a flow passage switching valve capable of simply and effectively cooling a bearing.

### Solution to Problem

(1) To achieve the above purpose, one aspect of the present invention provides a flow passage switching valve comprising: a housing having diverged passages through which exhaust gas can flow; a valve element provided in the housing to selectively open and close the diverged passages to switch a flow passage of the exhaust gas; a valve shaft integral with the valve element; and a bearing provided in the housing and configured to rotatably support the valve shaft, part of an outer periphery of the bearing being placed in one of the passages, **characterized in that** a cooling-water passage is formed near the bearing.

According to the above configuration (1), part of the outer periphery of the bearing is located in the exhaust gas passage of the housing and hence the bearing is exposed directly to the heat of the exhaust gas. However, the cooling water passage is formed near the bearing so that cooling water passing through the cooling water passage can cool the bearing.

(2) To achieve the above purpose, another aspect of the present invention provides a flow passage switching valve comprising: a housing having diverged passages through which exhaust gas can flow; a valve element provided in the housing to selectively open and close the diverged passages to switch a flow passage of the exhaust gas; a valve shaft integral with the valve element; a bearing provided in the housing and configured to rotatably support the valve shaft, part of an outer periphery of the bearing being placed in one of the passages; and a partition wall provided in the housing next to the bearing, defining the diverged passages and including a valve seat, **characterized in that** a cooling-water passage is formed near the bearing by the partition wall.

According to the above configuration (2), part of the outer periphery of the bearing is located in the exhaust gas passage of the housing and hence the bearing is exposed directly to the heat of the exhaust gas. However, the cooling water passage is formed in the partition wall near the bearing so that cooling water passing through the cooling water passage can cool the bearing. Furthermore, a space for the cooling-water passage can be ensured by use of the partition wall.

(3) To achieve the above purpose, in the configuration (1) or (2), preferably, the cooling-water passage is formed in the housing in parallel with the valve shaft and in almost straight shape.

According to the above configuration (3), in addition to the operations of the above configuration (1) or (2), the cooling-water passage is formed integral with the housing by pulling out a pin from the die-casted housing in parallel with the bearing when the housing is formed.

### Advantageous Effects of Invention

According to the above configuration (1) or (2), the bearing can be simply and effectively cooled, thereby preventing deterioration in function.

According to the above configuration (3), in addition to the effects of the above configuration (1) or (2), the cooling-water passage can be formed easily in the housing, thereby achieving cost reduction.

### Brief Description of Drawings

FIG. 1 is a front view of a bypass valve;
FIG. 2 is a right side view of the bypass valve;
FIG. 3 is a left side view of the bypass valve;
FIG. 4 is a plan view of the bypass valve;
FIG. 5 is a bottom view of the bypass valve;
FIG. 6 is a cross-sectional view of the bypass valve taken along a line VI-VI in FIG. 2;
FIG. 7 is a cross-sectional view of the bypass valve taken along a line VII-VII in FIG. 3; and
FIG. 8 is a cross-sectional view of the bypass valve taken along a line VIII-VIII in FIG. 4.

### Description of Embodiments

A detailed description of a preferred embodiment of a flow passage switching valve embodying the present invention will now be given referring to the accompanying drawings. In this embodiment, the flow passage switching valve of the present invention is explained as an EGR cooler bypass valve. The EGR cooler bypass valve is provided in an EGR device for recirculating part of exhaust gas from an engine to an air intake system.

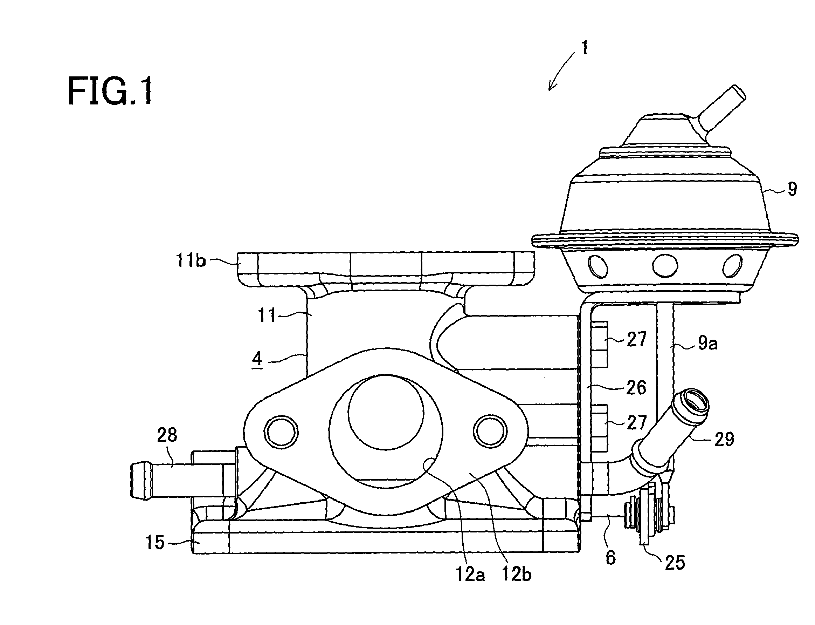

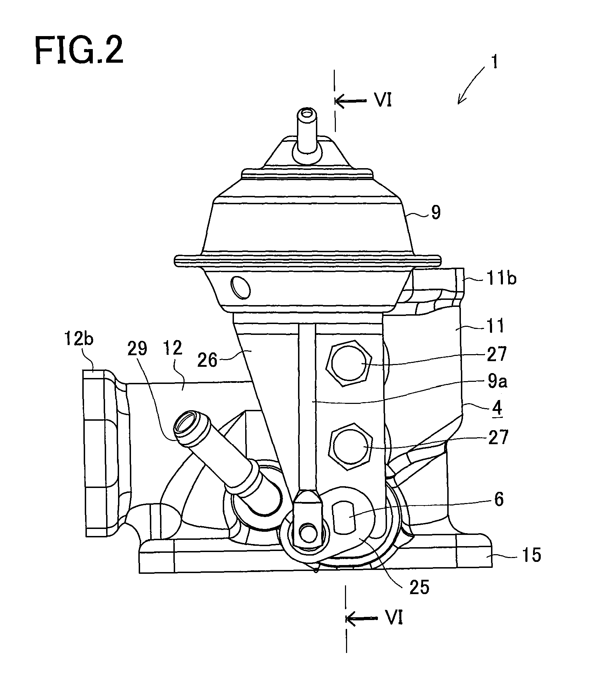

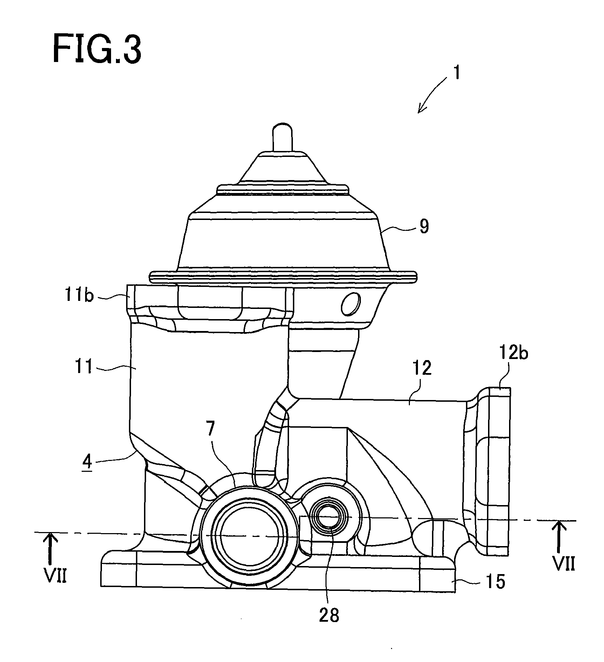

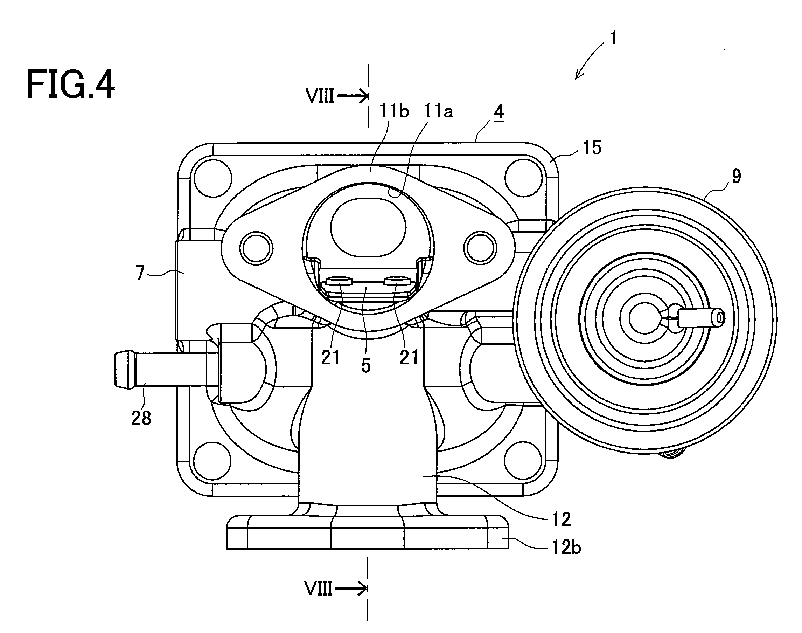

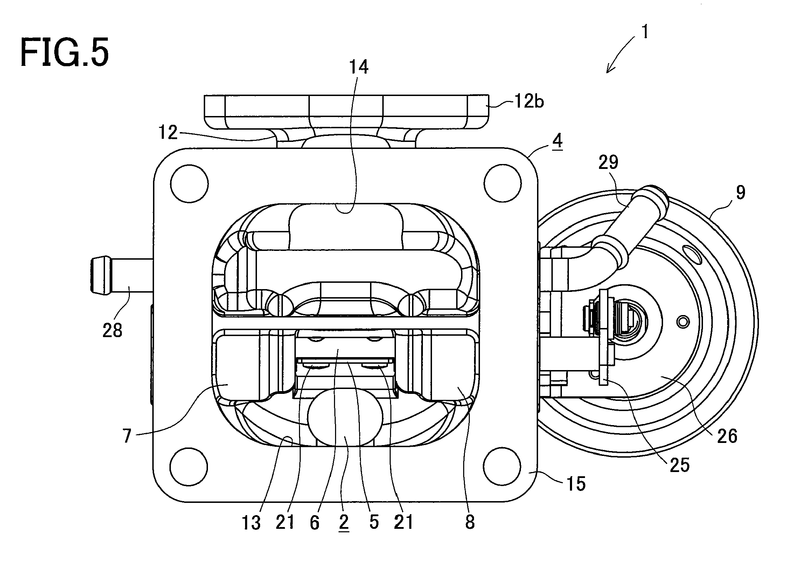

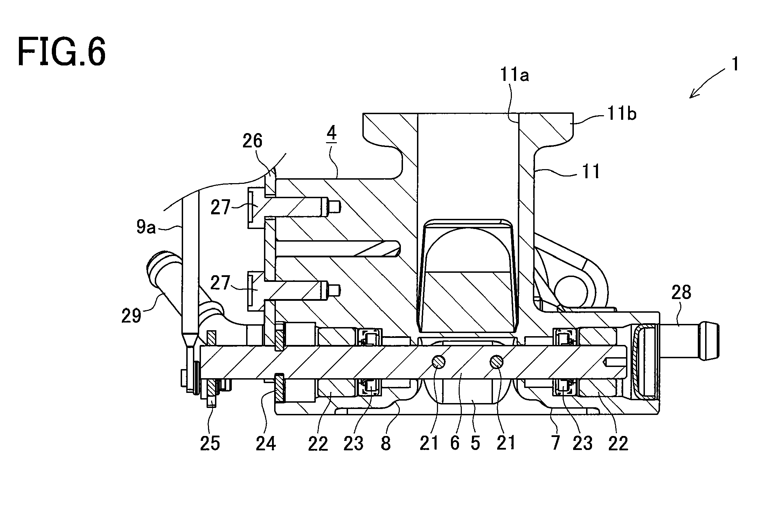

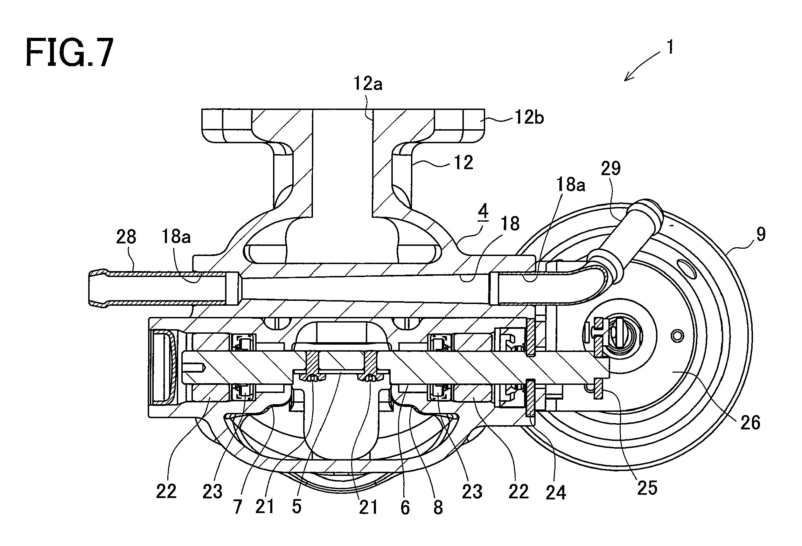

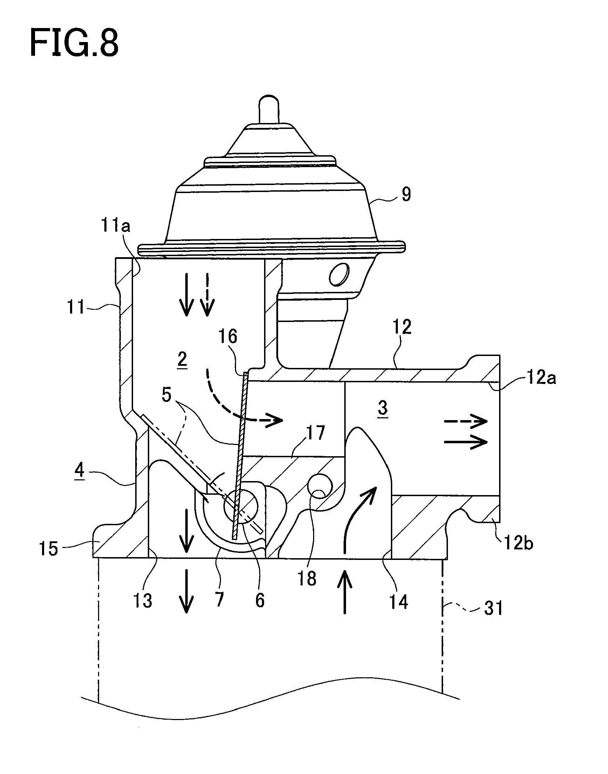

FIG. 1 is a front view of an EGR cooler bypass valve (hereinafter, simply referred to as a "bypass valve") 1. FIG. 2 is a right side view of the bypass valve 1. FIG. 3 is a left side view of the bypass valve 1. FIG. 4 is a plan view of the bypass valve 1. FIG. 5 is a bottom view of the bypass valve 1. FIG. 6 is a cross-sectional view of the bypass valve 1 taken along a line VI-VI in FIG. 2. FIG. 7 is a cross-sectional view of the bypass valve 1 taken along a line VII-VII in FIG. 3. FIG. 8 is a cross-sectional view of the bypass valve 1 taken along a line VIII-VIII in FIG. 4.

As shown in FIGs. 1 to 8, this bypass valve 1 includes a housing 4 formed with first and second diverged passages 2 and 3 (see FIG. 8) through which EGR gas can flow, which is part of the exhaust gas from the engine, a valve element 5 (see FIGs. 4 and 5-8) of a plate-like shape to selectively open and close each passage 2 and 3 to switch the flow passage for the EGR gas, a valve shaft 6 (see FIGs. 1, 5-8) integral with the valve element 5, a pair of bearings 7 and 8 (see FIGs. 3-7) provided in the housing 4 and configured for rotatably supporting the valve shaft 6, and a diaphragm actuator 9 (see FIGs. 1-5, 7, and 8) for rotating the valve shaft 6 to swing the valve element 5.

The housing 4 is made of aluminum by die casting. As shown in FIGs. 1 to 3, the housing 4 includes a cylindrical gas inflow part 11 protruding upward and a cylindrical gas outflow part 12 protruding forward (for example, leftward in Fig. 2). The cylindrical gas inflow part 11 includes a gas inlet 11a and a flange 11b at an end thereof. Similarly, the cylindrical gas outflow part 12 includes a gas outlet 12a and a flange 12b at an end thereof. To each of the flanges 11b and 12b, an EGR pipe constituting an EGR device is connected. As shown in FIGs. 5 and 8, the housing 4 is provided, at a lower side thereof, with a gas outlet 13 and a gas inlet 14 each opening downward, and a flange 15. The gas outlet 13 is communicated with the first passage 2 and the gas inlet 14 is communicated with the second passage 3. This flange 15 can be connected to an EGR cooler 31 of a U-flow type as shown in FIG. 8.

As shown in FIGs. 4 and 5-8, the valve element 5 is fixed to the valve shaft 6 with screws 21 so as to swing about the valve shaft 6 when the valve shaft 6 is rotated. The valve element 5 can be selectively disposed in a first position for opening the first passage 2 and closing the second passage 3 as indicated by a solid line in FIG. 8 and a second position for closing the first passage 2 and opening the second passage 3 as indicated by a chain double-dashed line in FIG. 8. While the valve element 5 is located in the first position, EGR gas flowing in the cylindrical gas inflow part 11 through the gas inlet 11a passes through the first passage 2 to flow in the EGR cooler 31 through the gas outlet 13 as indicated by solid arrows in FIG. 8. The EGR gas circulating through the EGR cooler 31 will then flow in the second passage 3 through the gas inlet 14 and flow outside through the gas outlet 12a as indicated by the solid arrow in FIG. 8. While the valve element 5 is located in the second position, on the other hand, the EGR gas flowing in the cylindrical gas inflow part 11 through the gas inlet 11a flows from the first passage 2 to the second passage 3 and then flows outside through the gas outlet 12a. The bypass valve 1 is configured as above to switch the flow passage of EGR gas between the passage passing through the EGR cooler 31 and the passage not passing through the EGR cooler 31.

As shown in FIGs. 6 and 7, in each of the bearings 7 and 8 that rotatably support both ends of the valve shaft 6, a bush 22 and a resinous seal member 23 are provided around the valve shaft 6. In one bearing 8, an E ring 24 is fit on the outer periphery of the valve shaft 6 to block movement of the valve shaft 6 in a thrust direction. One end portion of the valve shaft 6 protrudes out of the housing 4 and an end thereof is coupled with a rod 9a of the actuator 9 via a link member 25.

As shown in FIGs. 1 and 2, the actuator 9 is fixed to the housing 4 through a bracket 26 with bolts 27. The actuator 9 is configured to displace a built-in diaphragm (not shown) by negative pressure, thereby extending/contracting the rod 9a, rotating the valve shaft 6 to swing the valve element 5.

Herein, as shown in FIG. 5, part of the outer periphery of each of the bearings 7 and 8 is located and exposed in the first passage 2. Since the bearings 7 and 8 are located in the first passage 2 as above, the bypass valve 1 can be configured compact.

In the housing 4, next to those bearings 7 and 8, a partition wall 17 is formed to define the diverged second passage 2 and have a valve seat 16 with which the valve element 5 will contact as shown in FIG. 8. As shown in FIGs. 7 and 8, this partition wall 17 is formed with a cooling-water passage 18 near the bearings 7 and 8. This cooling-water passage 18 is formed in the housing 4 in parallel with the valve shaft 6 and in almost straight shape. A distance between the bearings 7 and 8 and the cooling-water passage 18 is determined to be about "1.5 mm to 3.0 mm" to keep required sufficient thickness of the housing 4. The cooling-water passage 18 is formed at the same time as the die casting process for the housing 4. As shown in FIG. 7, pipe joints 28 and 29 are fitted in openings 18a at both ends of the cooling-water passage 18. One pipe joint 28 has a straight shape and the other pipe joint 29 has a bent shape to avoid interference with the rod 9a of the actuator 9. Each of the pipe joints 28 and 29 is connected to a cooling-water pipe for circulating cooling-water of the engine.

According to the bypass valve 1 in this embodiment described above, the valve 1 is provided in the EGR cooler 31 of the EGR device and hence can switch the flow passage of EGR gas between the passage passing through the EGR cooler 31 and the passage not passing through the EGR cooler 31. Herein, in this bypass valve 1, part of the outer periphery of each bearing 7 and 8 is located and exposed in the first passage 2, the bearings 7 and 8 will be exposed directly to the heat of the high-temperature EGR gas. Accordingly, the bearings 7 and 8 may be thermally deformed, resulting in deterioration in bearing function.

According to the bypass valve 1 in this embodiment, however, the cooling-water passage 18 is provided in the partition wall 17 near the bearings 7 and 8 to allow the cooling-water of the engine to flow in this cooling-water passage 18. Thus, the cooling-water flowing in the cooling-water passage 18 cools the partition wall 17, thereby cooling the bearings 7 and 8 through the partition wall 17. According to the bypass valve 1, furthermore, the space for the cooling-water passage 18 can be ensured by use of the partition wall 17 formed in the housing 4. The bearings 7 and 8 provided in the housing 4 therefore can be cooled simply and effectively. This makes it possible to prevent thermal deformation of the bearings 7 and 8 and other defects, and retain the bearing function of the bearings 7 and 8. Since the bearings 7 and 8 are effectively cooled, the seal member 23 provided in each of the bearings 7 and 8 can have heat resistance to enhance a sealing performance. It is accordingly possible to prevent gas leakage from the bearings 7 and 8.

In this embodiment, the partition wall 17 is provided in substantially the center of the housing 4 and the cooling-water passage 18 is formed in such partition wall 17. Accordingly, the partition wall 17 can be cooled, so that the entire housing 4 can also be effectively cooled.

In this embodiment, moreover, the cooling-water passage 18 is formed in the housing 4 in parallel with the valve shaft 6 and in almost straight shape. Accordingly, when the housing 4 is molded, a pinhole is formed in parallel with the bearings 7 and 8 by pulling out a pin from the die-casted housing 4, thereby forming the cooling-water passage 18. Consequently, the cooling-water passage 18 can be easily provided in the housing 4 with an advantage of cost reduction.

The present invention is not limited to the above embodiment and may be embodied in other specific forms without departing from the spirit or essential characteristics thereof.

For instance, in the above embodiment, the cooling-water passage 18 is formed in the partition wall 17. Alternatively, the cooling-water passage may be formed in a different portion other than the partition wall 17 if only the cooling-water passage is located near the bearings 7 and 8.

### Industrial Applicability

The present invention can be utilized to switch the flow passage of EGR gas in the EGR cooler bypass valve mounted in the EGR device.

While the presently preferred embodiment of the present invention has been shown and described, it is to be understood that this disclosure is for the purpose of illustration and that various changes and modifications may be made without departing from the scope of the invention as set forth in the appended claims.

### Reference Signs List

- 1: Bypass valve
- 2: First passage
- 3: Second passage
- 4: Housing
- 5: Valve element
- 6: Valve shaft
- 7: Bearing
- 8: Bearing
- 16: Valve seat
- 17: Partition wall
- 18: Cooling water passage

## Claims

**1.** A flow passage switching valve comprising:
a housing (4) having diverged passages (2, 3) through which exhaust gas can flow;
a valve element (5) provided in the housing (4) to selectively open and close the diverged passages (2, 3) to switch a flow passage of the exhaust gas;
a valve shaft (6) integral with the valve element (5); and
a bearing (7, 8) provided in the housing (4) and configured to rotatably support the valve shaft (6),
part of an outer periphery of the bearing (7, 8) being placed in one (2) of the passages,
**characterized in that**
a cooling-water passage (18) is formed near the bearing (7, 8).

**2.** A flow passage switching valve comprising:
a housing (4) having diverged passages (2, 3) through which exhaust gas can flow;
a valve element (5) provided in the housing (4) to selectively open and close the diverged passages (2, 3) to switch a flow passage of the exhaust gas;
a valve shaft (6) integral with the valve element (5);
a bearing (7, 8) provided in the housing (4) and configured to rotatably support the valve shaft (6),
part of an outer periphery of the bearing (7, 8) being placed in one (2) of the passages; and
a partition wall (17) provided in the housing (4) next to the bearing (7, 8), defining the diverged passages (2, 3) and including a valve seat (16),
**characterized in that**
a cooling-water passage (18) is formed near the bearing (7, 8) by the partition wall (17).

**3.** The flow passage switching valve according to claim 1 or 2, wherein the cooling-water passage (18) is formed in the housing (4) in parallel with the valve shaft (6) and in almost straight shape.
